# EUROPEAN PATENT SPECIFICATION

(11) **EP 2 867 867 B1**
(45) Date of publication and mention of the grant of the patent: **15.06.2016**
(21) Application number: 13733443.9
(22) Date of filing: 28.06.2013
(51) Int. Cl.: G07C 5/08, B60R 11/00

(54) **A CRADLE ASSEMBLY FOR A TELEMATICS UNIT**
EINE WIEGEANORDNING FÜR EINE TELEMATIKEINHEIT
ENSEMBLE BERCEAU D'UNITÉ DE TÉLÉMATIQUE

(30) Priority: 29.06.2012 GB 201211599
(43) Date of publication of application: 06.05.2015
(73) Proprietor: Drivenlower Limited, Thame, Oxfordshire OX9 3UH (GB)
(72) Inventor: ALLEN, Simon Howard, Wooburn Common Buckinghamshire HP10 0JS (GB); CAVEN, Terry, High Wycombe Buckinghamshire HP12 3TB (GB)
(74) Representative: Gill Jennings & Every LLP
(86) International application number: PCT/GB2013/051716
(87) International publication number: WO 2014/001815

(56) References cited:
- GB-A- 2 471 727
- US-A1- 2007 170 330
- US-A1- 2008 294 690

## Description

### Background of the invention

Telematics systems have been in use for a number of years and their installation into all types of vehicles is widespread. These systems are most commonly used in fleet management and in security applications; however, some high end vehicles now include telematics solutions which may notify emergency services in case of an incident or maintenance services in case of vehicle problems or failure.

Data, information and/or communications in respect of vehicle movements, usage, style of usage, accidents or emergencies is desirable for many reasons, one of which may be to improve the security and safety of the vehicle or reduce the cost of insurance for the use of that vehicle. Whilst tracking and/or fleet management type telematics products have historically provided such data, there has always been a restriction to market potentials due to the cost of the basic unit and, more crucially, to the cost of the installation of that unit to the target vehicle.

Insurance companies are becoming interested in the data that such systems may produce as it gives them the ability to generate a premium that reflects the risk they are taking on a specific vehicle. As a result, insurers have often provided units to the customer and the information that it generates is sent directly to the insurer.

Individual users have no reason to obtain and install such equipment other than to make possible insurance savings. For this reason, the market is limited to vehicles where the owner is certain that a saving may be generated due to their restricted use and their type of driving. Outside of this, the user will not use such systems if they fear the information it produces might either increase their premiums or result in the withdrawal of insurance cover.

The pricing of such systems is key for the insurance companies themselves to provide such telematics solutions to their customers for mutual benefit. Those pricing models historically operated are unsuitable for mass market application. Typically, the installation and maintenance costs of the telematics systems are prohibitive. Insurance premiums paid by drivers have typically very little scope for extra costs and the cost of installing a sophisticated telematics system into a vehicle does not bring sufficient savings for either the insurer, or the user, to be worthwhile. In summary, the installation costs make existing business models and devices unsustainable.

One proposed solution, as described for example in GB 2,471,727, is a self-installed unit. In this way, the installation costs are reduced as the user does not have to take their vehicle to a qualified mechanic who is required to install a sophisticated telematics unit. However, known self-installed units are not desirable from the perspective of the insurer or telematics system provider since there is no way to know if the system has been tampered with or not installed correctly. A user wishing to cheat the system may simply transfer the unit to a different vehicle once installed or remove the unit from the vehicle. Thus, known self-installed telematics systems are unsuitable from the point of view of the service provider since it cannot be guaranteed that the unit is recording all vehicle activity or that the activity recorded actually belongs to that vehicle.

US2007/0170330 A1 describes a cradle assembly for attaching a display unit to an internal surface in a vehicle wherein a first mounting plate of the cradle with a support member attached thereto is for receiving the display unit on a first side of the cradle and for attaching the cradle to the internal surface of the windscreen is an adhesive used on a second mounting plate of the second side of the cradle.

The insurance telematics market requires a low cost product and there is therefore a need for telematics system which has low overall cost whilst maintaining a required level of integrity and reliability.

### Summary of the Invention

According to a first aspect of the present invention there is provided a cradle assembly for attaching a unit to an internal surface in a vehicle. The cradle assembly comprises a mounting plate for receiving the unit on a first side and for attaching to the internal surface using an adhesive on a second side. The mounting plate comprises a stress point arranged to fracture if a removal force is exerted on the mounting plate higher than a predetermined threshold level when the mounting plate is adhered to the internal surface, the force being less than the adhesive bond between the mounting plate and the internal surface such that when the force is exerted a portion of the mounting plate remains adhered to the internal surface and the mounting plate is broken.

The mounting plate is therefore made disposable and, once installed on an internal surface of a vehicle, cannot be moved to another vehicle or removed from the vehicle without significant effort and know how. Put simply, the mounting plate is tamper proof and resilient to brute force attacks. If the user of the telematics system attempts to move the cradle to another vehicle in an attempt to trick or fool the provider of the system, then the mounting plate will break and the system can no longer be used. The design of the cradle, and all its components, is to allow easy but secure installation; removing the ability to move the main unit from car to car at will.

The stress point may be arranged to fracture if a removal force is exerted on the mounting plate higher than a predetermined threshold level and in a direction away from the internal surface when the mounting plate is adhered to the internal surface. Alternatively, or additionally, the stress point may be arranged to fracture if a removal force is exerted on the mounting plate higher than a predetermined threshold level and in a direction parallel to the internal surface when the mounting plate is adhered to the internal surface.

The stress point may comprise a cut-portion, or alternatively, the stress point may comprise an indentation. The stress point may comprise at least two arcuate cut-out portions or indentations and the arcuate portions may define a region of the assembly substantially the same size as an adhesive pad affixed to the second side of the assembly for attaching to the internal surface. This improves the fracture of the assembly. The cradle assembly may also comprise, on the second side, one or more projections configured to strengthen the cradle assembly.

According to a second aspect of the present invention, a telematics system may be provided, comprising: a cradle assembly according to any preceding claim; and, a telematics unit. In this way, a sophisticated, low cost, self installed telematics package is provided which may facilitate 'Pay As/When/How you drive' insurance offers.

The telematics unit may comprise: a telecommunications module; a speaker; and, a microphone. In this way, two-way communication is facilitated to aid in the claims management process or to contact the emergency services. The telematics unit may also comprise a Global Positioning System, GPS, module to report the location of the unit.

The telematics unit may comprise an identification module having a first unique identifier and in which the cradle assembly may comprise an identification module having a second unique identifier, the telematics unit arranged to transmit the first and second unique identifiers to a remote data server when the telematics unit is attached to the cradle assembly. The unit is therefore indelibly linked to the cradle and any unauthorised connections can be detected.

The telematics unit may comprise a three-axis accelerometer in order to detect incidents. The telematics unit may comprise a calibration module arranged to detect when the telematics system is not attached to the internal surface of the vehicle and report to a remote data server. The unit is therefore able to determine when the system is installed incorrectly or has been tampered with.

The telematics unit may comprise a mileage recording module arranged to record mileage of the vehicle when the telematics system is attached to the internal surface of the vehicle and transmit the mileage to a remote data server.

Further, the telematics system may comprise an adhesive pad having a removable film on an exposed side of the pad when the pad is attached to the second side of the cradle assembly, thus aiding self-installation.

According to a third aspect of the present invention, there is provide a method of manufacturing a cradle assembly the method comprising: forming a base for the cradle assembly by injection moulding; installing a printed circuit board into the cradle assembly; assembling the base, a front cover, a release mechanism and the printed circuit board; and, manually attaching an adhesive pad to the second side of the cradle assembly.

### Detailed Description of the Drawings

An example of the present invention will now be described in detail with reference to the accompanying drawings, in which:
Figure 1 shows an exemplary telematics system;
Figure 2 shows an exemplary telematics system attached to an internal surface of a vehicle;
Figure 3 shows an exemplary telematics unit and cradle assembly when combined;
Figure 4 shows a schematic of an exemplary telematics unit;
Figure 5 shows an exemplary deconstructed cradle assembly;
Figure 6 shows the rear portion of an exemplary cradle assembly;
Figure 7 shows a cross section of an exemplary cradle assembly; and,
Figure 8 shows a rear view of an exemplary cradle assembly before an adhesive is added.

### Detailed Description

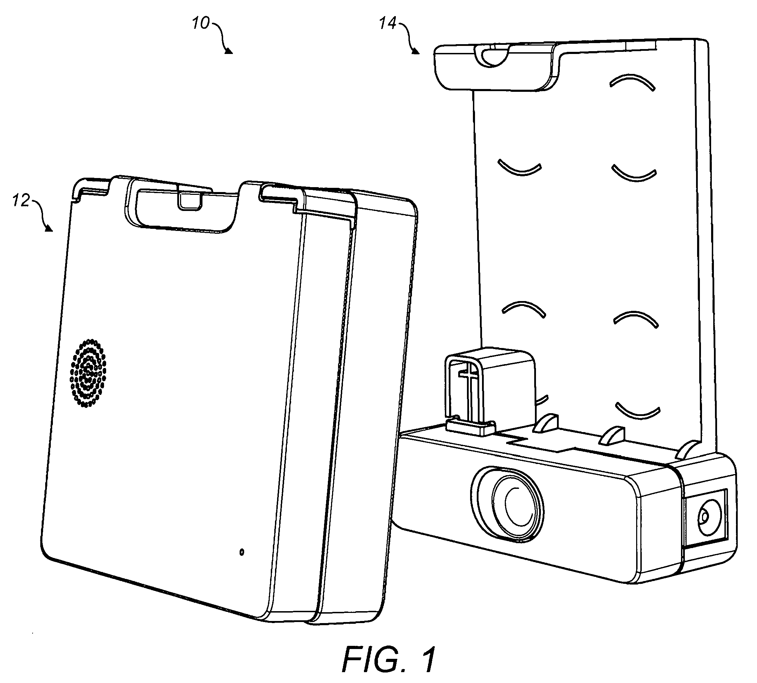

Figure 1 illustrates an exemplary telematics system 10 according to an example of the present invention. Shown are a telematics unit 12 and a cradle assembly 14, referred to herein as a cradle for convenience, for installing the unit to an internal surface of a vehicle. The unit 12 is adapted to cooperate with the cradle assembly in such a way that when the cradle is fixed to a surface of the vehicle, the unit can mate with the cradle and be held firmly in place. The system 10 is designed to be installed by a user or customer rather than a professional installation service. The unit 12 cooperates with the cradle 14 once the cradle has been mounted to an internal surface of a vehicle, which is preferably the windscreen.

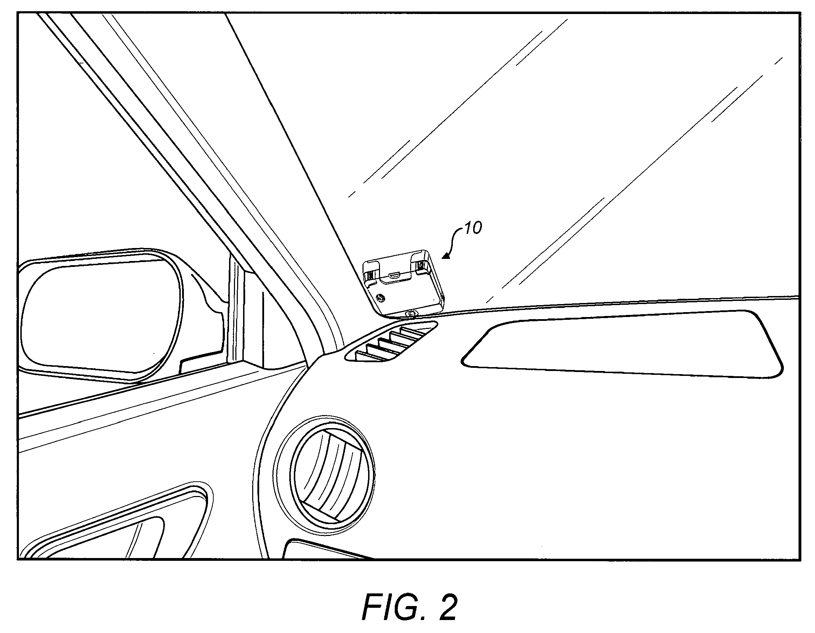

Figure 2 illustrates how the unit 12 and cradle 14 may be attached to an internal surface of a vehicle, in the illustrated example the windscreen of the vehicle. As shown, the cradle may be attached to the windscreen of the vehicle in a location which does not obscure the view of the driver. In the illustrated example, the combined telematics system is approximately the same shape as the tax disc and tax disc holder of the vehicle which itself is designed to be as unobtrusive to the view of the driver as possible.

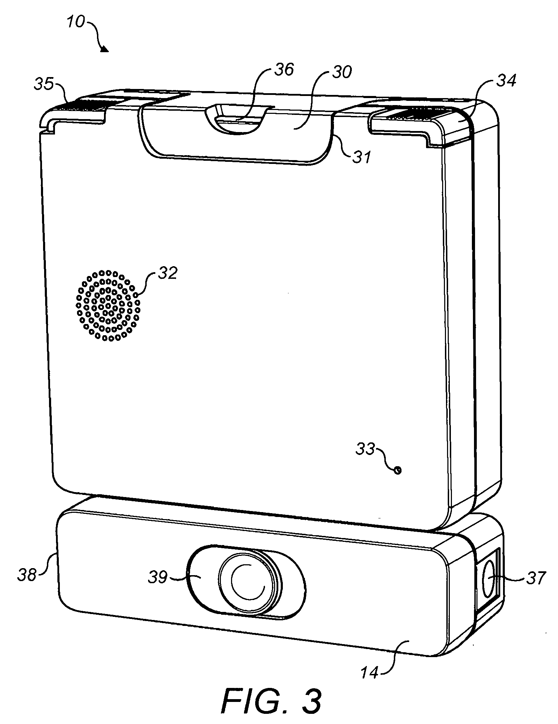

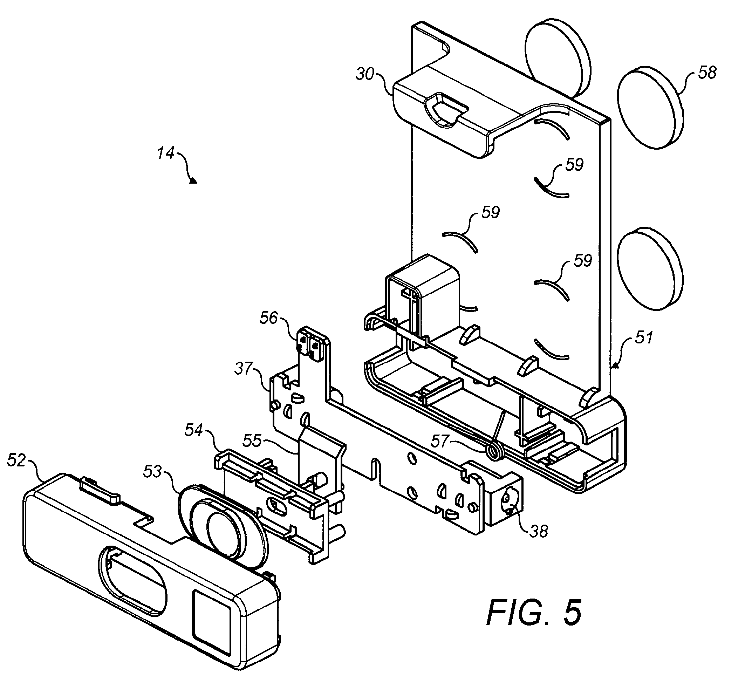

Figure 3 shows the unit 12 and cradle 14 when mated. An overhanging portion 30, as described later with reference to Figures 5 to 8 is positioned on the cradle 14 and cooperates with a protrusion 31 on the unit 12 to securely lock the unit into place. The unit 12 may comprise a socket which mates with a pin or plug on the cradle on the lower side of the unit 12 to provide further locking. This mating will be described in more detail below.

The cradle comprises a rear portion, or back plate, for attaching to a windscreen, an overhanging portion 30 and a base section positioned at the other end of the assembly from the overhanging portion. The base section will be described below in the context of Figures 5 to 8. The overhanging portion 30 of the cradle 14 may be flexible but biased substantially into a position perpendicular to the rear portion of the assembly, which sits substantially parallel to the internal surface of the vehicle when in use, such that when the unit 12 is pushed into the cradle 14, the overhanging portion 30 is moved out of the way by the unit 12 but returns to its perpendicular position when the unit 12 is fully inserted and the overhanging portion 30 meets with the protrusion 31 on the unit 12. Any suitable clamp or clasp or the like may be used to hold the unit in place provided that the engagement mechanism is able to releasably, or detachably, hold the unit in place with the cradle.

The telematics unit 12, itself includes a speaker 32 and a microphone 33 to allow for two-way communication with the provider of the telematics service. In this particular example, the provider of the telematics service may be an insurer. Not shown in the external view of the telematics unit 12 in Figure 3, may be a telecommunications module. Preferably, the telecommunications module may be a GSM communications module to enable voice communications between the telematics operator, i.e. the insurer, and the driver of the vehicle in which the telematics system has been installed. Alternatively, the GSM communications module may be a UMTS module or an LTE module.

The GSM communications module is adapted to cooperate with the internal speaker 32 and microphone 33 shown in Figure 3. In this way, for example, a claims management process may be sped up dramatically. As soon as an incident has occurred, the insurer can be in contact with the driver immediately. The unit can be detached from the cradle and then passed over to the second driver of an incident or to a witness, so that the facts can be verified straight away or the details of the second driver of the incident obtained. Alternatively, the telematics unit can be used to contact the emergency services.

In a further example, the cradle 14 or unit 12 may comprise a solenoid (not shown) which can be remotely activated by the operator to release the unit 14 from the cradle 12 such that the two-way communication can occur outside of the vehicle. In this way, the unit 12 cannot be removed from the cradle to be tampered with or moved into a separate vehicle without the insurer's permission. When the solenoid is activated, it may remove a locking pin positioned within the unit 12 or cradle 14 that locks the two pieces together.

Also shown in Figure 3 is an assistance button 34 on the unit 12. The pressing of this button 34 may contact the emergency services or the provider of the telematics system such as the insurer. The GPS location of the unit 12 may be transmitted to the emergency services or the insurer so that the accident location or incident location can be determined. A two-way communication call can then also occur if required. To provide the GPS location, the unit 12 may comprise a GPS module, which will be described in more detail below.

A business mileage recorder 35 may also be provided in the unit 12 which can help in aiding fleet management or vehicle management services. The output of the business mileage recorder may be transmitted by the unit 12 to a remote server, either periodically or on request of the operator or the user. The mileage recorder 35 data may also be used by the insurer to provide insurance services based on a pay per use scheme.

A data communications module may be provided in the unit 12 to transmit recorded data to a remote data server which may be operated by the provider of the telematics system. The data communications module may preferably be a GPRS communications or alternatively, an HSDPA communications module or an LTE communications module.

The unit 12 may also comprise a warning light 36 which may serve to provide a number of indications to the user. For example, that the unit is running out of battery charge, or that the unit is prohibited from transmitting data due to a poor communications signal.

One or more charging points 37, 38 may be located on the unit 12 (not shown) or alternatively in the cradle 14, as shown in Figure 3. Figure 3 shows two charging points 37, 38. The unit 12 may be self powered with a battery and may last for a 30 days or more per single battery charge. The battery usage may be dependent on the usage of the communications modules and other modules. The charging points 37, 38 may be adapted to charge the battery via the cigarette lighter of the vehicle. It is also contemplated that other charging mechanisms may be used such as kinetic energy harvesting or solar power.

Figure 3 illustrates a release button 39 which may release the unit 12 from the cradle 14. The release button 39 releases a locking mechanism positioned between the unit 12 and the cradle 14. The release button 39 will be described in more detail below.

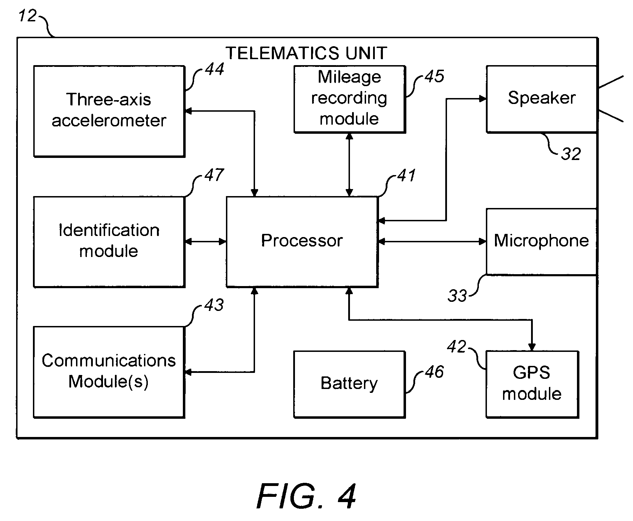

The internal modules of the telematics unit 12 will now be described in the context of Figure 4. The modules and components may be installed on a printed circuit board (PCB). The workings of the telematics unit may be controlled by a processor 41. Although the controlling module of the telematics unit is described as a processor, it will be understood that a processing unit, or processor, may in fact comprise a number of different components arranged to execute a plurality of executable instructions to operate and control the various modules, the interactions between the modules and the steps described herein.

The processor may be implemented using a computer system which comprises one or more processors connected to a system bus. Also connected to the system bus may be a working memory, which may comprise any random access or read only memory (RAM/ROM), display device (not shown in the present implementation but is contemplated for use with the principles of the present invention) and an input device (also not shown). A user may interact with a user interface using an input device, which may comprise, amongst others known in the art, a mouse, pointer, keyboard or touch-screen. If a touch-screen is used a display device and input device may comprise a single input/output device. The computer system may also optionally comprise one or more storage devices and communication devices, which may enable communication over a network (not shown). Storage devices may be any known local or remote storage system using any form of known storage media.

In use, computer program code may be loaded into a working memory to be processed by the one or more processors. An operating system (OS) may be optionally loaded into memory together with optional computer-program code for implementing a telematics system. The working memory may also comprise computer-program code for implementing a user interface. The system may be implemented using library components. The OS and/or the computer-program code may comprise suitably configured computer program code to enable the proper functioning of the computer system as described above.

It is important to note that while the present invention has been described in a context of a fully functioning data processing system, those of ordinary skill in the art will appreciate that the processes of the present invention are capable of being distributed in the form of a computer readable medium of instructions and a variety of forms and that the present invention applies equally regardless of a particular type of signal bearing media actually used to carry out distribution. Examples of computer readable media include recordable-type media such as floppy disks, a hard disk drive, RAM and CD-ROMs as well as transmission-type media such as digital and analogue communications links.

Generally, any of the functionality described in this text or illustrated in the figures can be implemented using software, firmware (e.g., fixed logic circuitry), programmable or nonprogrammable hardware, or a combination of these implementations. The terms "component" or "function" as used herein generally represents software, firmware, hardware or a combination of these. For instance, in the case of a software implementation, the terms "component" or "function" may refer to program code that performs specified tasks when executed on a processing device or devices. The program code can be stored in one or more computer readable memory devices as described above. The illustrated separation of components and functions into distinct units may reflect an actual physical grouping and allocation of such software and/or hardware, or can correspond to a conceptual allocation of different tasks performed by a single software program and/or hardware unit.

Referring back to Figure 4, and as described above, the telematics unit may comprise a GPS module 42 which records positional data at varying time intervals, for example, one second intervals. The frequency at which positional data is recorded may have a direct effect the battery life of the telematics unit. As described above, the GPS module may be configured to be in communication with the system bus and controlled by the processor. To save on battery life, the GPS module may be turned off when not in use. The GPS positional data may be recorded in a data store (not shown) and subsequently transmitted to a remote data server (not shown) every time a measurement is taken, or in a batch transmission. It is common in telematics solutions for data to be transmitted when bandwidth requirements on the telecommunications network are low. The GPS data may be used by the remote server to track the location of the vehicle or to track the speed of travel of the vehicle. A variety of uses are known for this data in a variety of applications.

Communication modules 43 may also be provided in the unit 12 to transmit recorded data to the provider of the telematics system or to initiate a voice call with an operator using the speaker 32 and microphone 33 provided within the unit. Types of communications modules are include, for example, GSM, cdmaOne, GPRS, UMTS and LTE. If the speaker and microphone are not provided within the unit, the unit may be a data only unit and only a data communications module may be provided, such as a GPRS communications module.

The unit 12 may also comprise a three-axis accelerometer 44 which may identify if an incident has occurred and record magnitude or direction information or both for subsequent forensic analysis. The accelerometer 44 may also be used to track the speed of the vehicle for management services. The output of the accelerometer may be provided to the processor for analysis. The processor may be operative to activate the communication module 43 when an incident has been detected by the accelerometer 44. As described above, the telematics unit may comprise a mileage recording module 45 and a battery 46.

The telematics unit 12 may also comprise an identification module 47. The identification module comprises a unique identifier and is used by the processor to verify the connection between the unit 12 and the cradle 14. The cradle 14 also includes an identification module (not shown in Figure 4). The unique identifier of the cradle is transmitted to the unit 12, or read by the unit 12, when the two are mated together. The processor then pairs the unique identifier of the unit 12 stored in the identification module 47 with the unique identifier of the cradle 14. In a further example, the identification module 47 of the unit 12 may be removable and may uniquely identify the user, or subscriber, to the operator of the telematics solution. When paired with the unique identifier of the cradle 14, the operator is able to determine that the unit is in the correct cradle 14 by comparing the paired unique identifiers to a set of stored unique identifiers.

Upon first mating of the unit 12 with the cradle 14, or upon initiation by the user or the operator, the processor 41 may be operable to carry out a calibration phase. The calibration is carried out by the main unit 12, however it recognises whether the unit 12 is attached to a cradle 14 or not. The unit 12 uses its internal accelerometer 44 to perform the calibration process. The processor 41 is operable to determine the exact state of the accelerometer and then remember this state. If this state changes, then the processor is able to detect the relative movement of the unit 12 and determine that this movement would not be caused by normal operation of the unit 12 when mated with the cradle 14.

In order to calibrate, the unit 12 must be firmly mounted on the cradle so as to maintain its position. Once it calibrates it will then assume that it should always be in the same position. If this position changes then the unit 12 and cradle 14 must have been removed from its mounting. Every time the unit 12 is released from the cradle 14 and refitted, it may perform a recalibration. Any disconnection is notified to the remote data services, or background services, automatically. The unit 12 is therefore operable to determine that the unit 12 has not been removed from its cradle 14 but is not firmly fixed as the calibration is either different or cannot be agreed as it changes through movement.

Disconnection can be sensed by the unit 12 and the unit 12 is operable to determine that it is no longer connected to the cradle 14. The identification module or chip of the cradle 14 cannot be read by the processor of the unit 12. If the unit 12 is returned to the same cradle 14 then the unit will report connection to the data server. If the unit 12 goes into a different cradle 14, identified through storage and checking of the identification module of the cradle 14, the processor is operable to report the change of identification to the remote data server.

Upon detecting a change, the data server may be configured to react in a number of ways. An alert may be provided to the operator, a remote shutdown instruction warning may be transmitted to the unit, or alternatively, the data server may simply stop recording information. When the operator detects an alert, the operator may contact the user to inform or warn him of the new connection and that the unit 12 is invalid.

The calibration has the benefit that, if the unit 12 and cradle 14 were to be removed from the windscreen and then left on the seat when connected to one another, the calibration would not be effective owing to the unit 12 moving about and being in a different orientation to that when it was mounted on the screen. The processor 41 is operable to determine the relative orientation of the unit 12 using the accelerometer 44 and then determine that the unit has been placed on a seat by monitoring the movement of the unit 12.

The cradle assembly 14 will now be described in the context of Figures 5 to 8 which illustrate different views of the cradle 14. The cradle comprises a main assembly 51 which is injection moulded. The main assembly acts as a base for the rest of components and it is this aspect of the assembly that is adhered to the windscreen. The main assembly comprises a flat plate and an overhanging portion 30 described above, which includes a protrusion to expose the warning light 36 on the unit 12 when the unit 12 is subsequently mated. The main assembly comprises a cut out portion which acts to receive the other components of the assembly.

The cradle assembly includes a front cover 52 which serves to protect the components. The front cover 52 includes a cut out portion which exposes a slide release button 53 when the cradle is assembled. The front cover 52 also includes a protrusion which protects exposed pins of a printed circuit board (PCB) 56, which is described in more detail below.

The slide release button 53 serves to release the locking mechanism of the cradle 14 and unit 12. The slide release button 53 cooperates with a release actuator 54 which in turn pulls down a catch 55. The catch is pulled down by the release actuator against a spring 57. The spring 57 is biased to maintain the catch 55 in an up position unless the release mechanism is activated by the sliding of the slide release button 53. The catch 55 extends outwards of the cradle assembly and cooperates with an opposing indentation on the underside of the unit 12. When the unit is placed into the cradle 14, the catch 55 securely locks the unit to the cradle. Upon sliding of the slide release button 53, the release actuator 54 is actuated and the catch is moved away from the unit so that it can be released, against the biasing force of the spring 57.

The cradle 14 also includes a printed circuit board (PCB) 56 which contains an identification chip, or module, and a charging circuit. Pins are positioned at the top of PCB 56 and engage with opposing tracks on the underside of the unit PCB to pass charge to unit 12 when the unit 12 is in cradle 14. The pins also cooperate with the tracks of the main unit PCB so that the processor 41 is able to read the identification module to obtain the unique identifier of the cradle 14. In this way, the processor is operable to determine the unique code of the cradle to prevent unauthorised installation.

The release actuator 54 and PCB 56 comprise cooperating protrusions and indentations for support and ease of assembly.

Power sockets 37 are attached to each end of the PCB 56 so that the charging circuit can pass charge to the battery of the unit. Although a variety of connectors are possible, the illustrated connector is operable to be charged by the cigarette lighter output of a vehicle so that the unit can be charged without unnecessary burden on the user.

Also shown in Figure 5 is a set of adhesive pads 58. The adhesive pads serve to attach the cradle to the windscreen. The pad has a peelable film on one side so that when the film is removed, the sticky side is exposed and the pads can be attached to the windscreen. During manufacture the other side of the pad is attached to the cradle 14. A number of different adhesives could be used to attach the cradle to the vehicle. The adhesive must be strong enough to prevent inadvertent disconnection of the cradle from the vehicle and also to hold the weight of the unit and cradle without substantial give. The adhesive must also be able to attach to the vehicle for a sustained period of time.

The adhesive may be a high tack double sided polyethylene foam tape which is cut to size. As well as being cut to size, the high tack double sided polyethylene foam may also be in the form of a pad. The tape or pad may be a strong 3mm thick white polyethylene foam carrier coated on both sides with a heavy mass of a high tack, crosslinked modified acrylic adhesive, resulting in a very aggressive high tack foam tape. These tapes or pads offer high shear resistance, good adhesion, little drying or curing time and good ageing. This particular type of adhesive allows for easy self-install of the cradle.

The cradle is manufactured using injection moulding for all parts of the plastic main cradle itself. The electronic components are mounted on a printed circuit board which is housed within the plastic injection moulded components. The various components are assembled and subsequently, the glue or adhesive pads are then manually attached to the rear of the cradle.

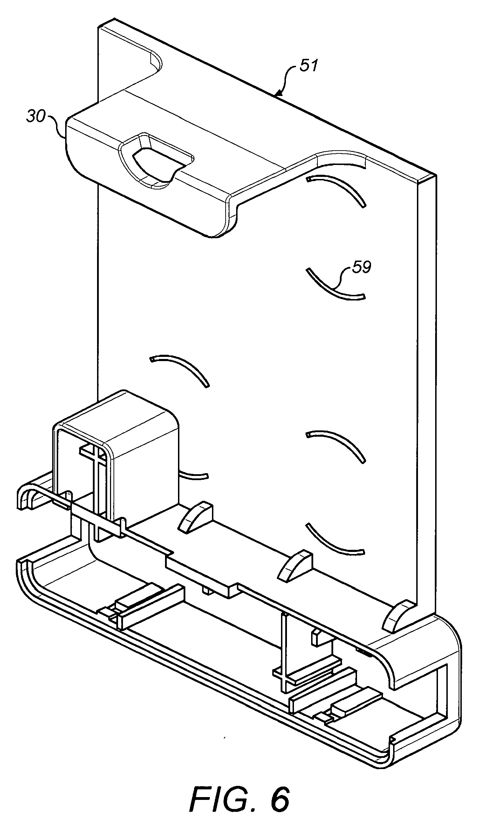

Figure 5 also shows that the cradle 14 includes one or more stress points 59. Figure 6 illustrates the main assembly portion 51 of the cradle in isolation. The stress points are shown clearly. The stress points are configured to maintain sufficient strength in normal operation to maintain the weight on the unit and that in the event of an accident the cradle and unit would remain intact. However, when a force is used to remove the cradle from the screen the force required to break the 'bond' is greater than to break the stress points. Put another way, the 'break-out' pieces or stress points are designed, configured and scaled to have a fracture point that is less than the adhesive bond. In this way, the cradle stress points can be made larger or smaller depending upon the adhesive chosen for the affixing of the cradle to the windscreen.

By having stress points in the way, the cradle is made tamper proof and disposable. Once the cradle has been installed in the vehicle it cannot be removed without industrial assistance. For example, if a user attempts to remove the cradle from the vehicle in an attempt to transfer the cradle to another vehicle in order to cheat the system and, either avoid recording data, or record false data, then the cradle will break and cannot then be used again. The user will have to requisition a new cradle from the telematics provider in order to keep using the system.

The term stress point is used herein to define a removable region. For example, in the exemplary implementation illustrated in the Figures, the stress point is considered to be the circular area comprising the two arcuate cut-out portions and the attach points or joining portions between them. Although in operation, it is the joining portions that separate the two arcuate sections that will fracture; the stress point is considered to be the whole region, since the size and shape of the cut-out portions will affect the stress under which the joining sections will fracture.

Preferably, the removal force required to break the stress points is greater than a predetermined threshold so that the stress points are not broken in an incident or accidentally, but only if a sufficient force is applied in an attempt to remove the cradle from the vehicle.

As is shown in Figure 6, the stress points may preferably be made of two arcuate cut out portions, each separated by a joining portion. Each stress points may be substantially the same size and shape as the adhesive pad 59, i.e. the arcuate cut out portion having substantially the same radius and being positioned slightly outside a virtual circle positioned on the assembly. In this way, the stress point is configured to fracture around the adhesive upon application of a removal force. The size of the joining portions affects the force required to fracture the stress point. The portions joining the two cut out potions are the portions that will fracture upon application of the force, resulting in a circular region remaining adhered to the windscreen and the cradle being removed. Preferably the cut-out portions extend through the assembly; however, the portions may also be indentations that provide substantially weaker areas than the main assembly so that they fracture upon application of a force.

Other configurations of the stress points are envisaged but not shown. For example, there could be four cut-out portions positioned in a circular configuration with four attach points positioned on opposing sides of the circle. The overall amount of material missing from the assembly would be same divided among the increased number of cut out portions. The stress points could of course also be elliptical.

The force required to fracture the stress points is related to the configuration of the stress points. Preferably, the force required to fracture the stress points may be a removal force in a direction away from the windscreen. A force parallel to the windscreen may also fracture the stress points. This may particularly be the case if the assembly is configured to have single mounting point with weak regions arranged on either side of the mounting point which may be a post-like attachment. In this configuration, the cradle assembly will resemble a stand or tree with the base configure to fracture.

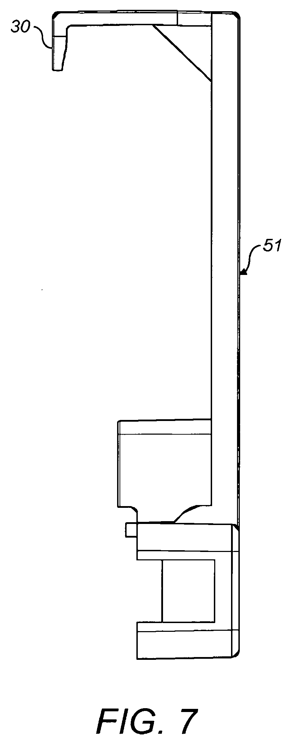

Figure 7 shows a side view of the rear portion 51 of the main assembly of the cradle 14. The overhanging portion 30 is shown, as is the base region which is adapted to cooperate with the front cover 52 and receive the above described components.

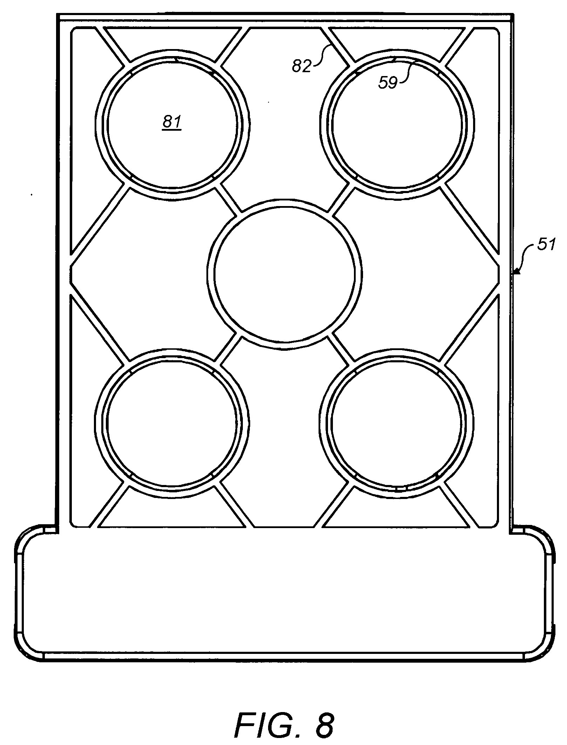

Figure 8 shows a rear view of the rear portion 51 of the cradle 14. The stress points 59 can be seen in the preferred two arcuate cut out portion configuration. The stress points 59 surround a circular polished surface 81 to receive the adhesive pads. In a preferred example, there are five mounting points. The surfaces of the mounting points are polished to allow for the best possible adhesive bond. The central mounting point may contain branding information and is not expected to receive an adhesive pad since it is not have a corresponding stress point.

Although the figures show four adhesives pads 58, four stress points 59, eight attach points and five mounting points 81 (one not in use), there may be any number of adhesive pads and mounting and stress points, provided that the unit is held securely when in normal operation.

Also shown in Figure 8 are a number of projections 82 arranged in a lattice configuration, that is, diagonally between each stress point 59 and surrounding each arcuate cut out portion 59. The projections serve to strengthen the cradle assembly 14.

The cradle assembly may preferably be manufactured from a blend of Polycarbonate and Acrylonitrile butadiene styrene (PC/ABS). PC/ABS blends are high impact amorphous materials for injection moulding and extrusion and combine the most desirable properties of ABS and Polycarbonate. They offer the processability of ABS together with the superior mechanical properties, impact resistance and heat resistance of polycarbonate.

The present invention thus provides a telematics unit and cradle assembly that can be manufactured a low cost and can be self-installed by a user. The cradle assembly is adapted to be disposable and tamper proof through the use of stress points of the assembly such that any efforts to remove the cradle from the vehicle will result in fracture.

## Claims

1. A cradle assembly (14) for attaching a unit (12) to an internal surface in a vehicle, comprising:
a mounting plate for receiving the unit (12) on a first side and for attaching to the internal surface using an adhesive on a second side,
wherein the mounting plate comprises a stress point (59) arranged to fracture if a removal force is exerted on the mounting plate higher than a predetermined threshold level when the mounting plate is adhered to the internal surface, the force being less than the adhesive bond between the mounting plate and the internal surface such that when the force is exerted a portion of the mounting plate remains adhered to the internal surface and the mounting plate is broken.

2. A cradle assembly (14) according to claim 1, in which the stress point is arranged to fracture if a removal force is exerted on the mounting plate higher than a predetermined threshold level and in a direction away from the internal surface when the mounting plate is adhered to the internal surface.

3. A cradle assembly (14) according to claim 1, in which the stress point is arranged to fracture if a removal force is exerted on the mounting plate higher than a predetermined threshold level and in a direction parallel to the internal surface when the mounting plate is adhered to the internal surface.

4. A cradle assembly (14) according to any preceding claim, in which the stress point (59) comprises a cut-portion or in which the stress point (59) comprises an indentation.

5. A cradle assembly (14) according to an of the preceding claims in which the stress point comprises at least two arcuate cut-out portions, wherein optionally the arcuate portions define a region of the assembly substantially the same size as an adhesive pad (58) affixed to the second side of the assembly for attaching to the internal surface.

6. A cradle assembly (14) according to any preceding claim, in which the cradle assembly comprises, on the second side, one or more projections (82) configured to strengthen the cradle assembly (14).

7. A telematics system, comprising:
a cradle assembly (14) according to any preceding claim; and,
a telematics unit (12).

8. A telematics system according to claim 7, in which the telematics unit (12) comprises:
a telecommunications module;
a speaker (32); and,
a microphone (33).

9. A telematics system according to claim 7 or 8, in which the telematics unit (12) comprises a Global Positioning System, GPS, module.

10. A telematics system according to any of claims 7 to 9, in which the telematics unit (12) comprises an identification module having a first unique identifier and in which the cradle assembly (14) comprises an identification module (47) having a second unique identifier, the telematics unit (12) arranged to transmit the first and second unique identifiers to a remote data server when the telematics unit (12) is attached to the cradle assembly (14).

11. A telematics system according to any of claims 7 to 10, in which the telematics unit (12) comprises a three-axis accelerometer (44).

12. A telematics system according to any of claims 7 to 11, in which the telematics unit (12) comprises a calibration module arranged to detect when the telematics system is not attached to the internal surface of the vehicle and report to a remote data server.

13. A telematics system according to any of claims 7 to 12, in which the telematics unit (12) comprises a mileage recording module (45) arranged to record mileage of the vehicle when the telematics system is attached to the internal surface of the vehicle and transmit the mileage to a remote data server.

14. A telematics system according to any of claims 7 to 13, further comprising an adhesive pad (58) having a removable film on an exposed side of the pad when the pad (58) is attached to the second side of the cradle assembly.

15. A method of manufacturing a cradle assembly (14) according to any one of claims 1 to 6, the method comprising:
forming a base for the cradle assembly by injection moulding;
installing a printed circuit board (56) into the cradle assembly (14);
assembling the base, a front cover, a release mechanism and the printed circuit board (56); and,
manually attaching an adhesive pad (58) to the second side of the cradle assembly (14).

## Patentansprüche

1. Wiegeanordnung (14) zum Anbringen einer Einheit (12) an eine interne Oberfläche in einem Fahrzeug, umfassend:
eine Montageplatte zur Aufnahme der Einheit (12) auf einer ersten Seite und zum Anbringen an die interne Oberfläche unter Verwendung eines Klebers an eine zweite Seite,
wobei die Montageplatte einen Spannungspunkt (59) umfasst, der eingerichtet ist zu brechen, wenn eine Abzugskraft auf die Montageplatte ausgeübt wird, die höher als eine vorbestimmte Schwellenwertstufe ist, wenn die Montageplatte an die interne Oberfläche befestigt wird, wobei die Kraft geringer als die Klebverbindung zwischen der Montageplatte und der internen Oberfläche ist, derart, dass, wenn die Kraft ausgeübt wird, ein Abschnitt der Montageplatte an die interne Oberfläche befestigt bleibt und die Montageplatte zerbrochen wird.

2. Wiegeanordnung (14) gemäß Anspruch 1, bei welcher der Spannungspunkt eingerichtet ist zu brechen, wenn eine Abzugskraft auf die Montageplatte ausgeübt wird, die höher als eine vorbestimmte Schwellenwertstufe und in einer Richtung von der inneren Oberfläche weg ist, wenn die Montageplatte an der inneren Oberfläche anhaftet.

3. Wiegeanordnung (14) gemäß Anspruch 1, bei welcher der Spannungspunkt eingerichtet ist zu brechen, wenn eine Abzugskraft auf die Montageplatte ausgeübt wird, die höher als eine vorbestimmte Schwellenwertstufe und in einer Richtung parallel zur inneren Oberfläche ist, wenn die Montageplatte an der inneren Oberfläche anhaftet.

4. Wiegeanordnung (14) gemäß einem vorhergehenden Anspruch, bei welcher der Spannungspunkt (59) einen Schnittteil umfasst, oder bei welcher der Spannungspunkt (59) eine Einbuchtung umfasst.

5. Wiegeanordnung (14) gemäß einem der vorhergehenden Ansprüche, bei welcher der Spannungspunkt wenigstens zwei bogenförmige ausgeschnittene Teile umfasst, wobei die bogenförmigen Teile optional einen Bereich der Anordnung im Wesentlichen der gleichen Größe wie ein Klebepad (58) definieren, das an der zweiten Seite der Anordnung zum Anbringen an die innere Oberfläche befestigt ist.

6. Wiegeanordnung (14) gemäß einem vorhergehenden Anspruch, bei welcher die Wiegeanordnung, auf der zweiten Seiten, einen oder mehrere Vorsprünge (82) umfasst, die konfiguriert sind, die Wiegeanordnung (14) zu verstärken.

7. Telematiksystem, umfassend:
eine Wiegeanordnung (14) gemäß einem vorhergehenden Anspruch; und,
eine Telematikeinheit (12).

8. Telematiksystem gemäß Anspruch 7, bei dem die Telematikeinheit (12) umfasst:
ein Telekommunikationsmodul;
einen Lautsprecher (32); und,
ein Mikrofon (33).

9. Telematiksystem gemäß Anspruch 7 oder 8, bei dem die Telematikeinheit (12) ein "Global Positioning System", GPS-Modul umfasst.

10. Telematiksystem gemäß einem der Ansprüche 7 bis 9, bei dem die Telematikeinheit (12) ein Identifikationsmodul mit einem ersten einzigartigen Bezeichner umfasst und, bei dem die Wiegeanordnung (14) ein Identifikationsmodul (47) mit einem zweiten einzigartigen Bezeichner umfasst, wobei die Telematikeinheit (12) eingerichtet ist, die ersten und zweiten einzigartigen Bezeichner an einen fernen Datenserver zu senden, wenn die Telematikeinheit (12) an die Wiegeanordnung (14) angebracht ist.

11. Telematiksystem gemäß einem der Ansprüche 7 bis 10, bei dem die Telematikeinheit (12) einen 3-Achsen-Beschleunigungssensor (44) umfasst.

12. Telematiksystem gemäß einem der Ansprüche 7 bis 11, bei dem die Telematikeinheit (12) ein Kalibriermodul umfasst, das eingerichtet ist, zu erkennen, wenn das Telematiksystem nicht an die innere Oberfläche des Fahrzeugs angebracht ist und an einen fernen Datenserver zu berichten.

13. Telematiksystem gemäß einem der Ansprüche 7 bis 12, bei dem die Telematikeinheit (12) ein Aufzeichnungsmodul (45) für Meilenstand umfasst, das eingerichtet ist, den Meilenstand des Fahrzeugs aufzuzeichnen, wenn das Telematiksystem an die innere Oberfläche des Fahrzeugs angebracht ist und den Meilenstand an einen fernen Datenserver zu senden.

14. Telematiksystem gemäß einem der Ansprüche 7 bis 13, das ferner ein Klebepad (58) mit einem entfernbaren Film aus einer exponierten Seite des Pads aufweist, wenn das Pad (58) an die zweite Seite der Wiegeanordnung angebracht ist.

15. Verfahren zur Herstellung einer Wiegeanordnung (14) gemäß einem der Ansprüche 1 bis 6, wobei das Verfahren umfasst:
Bilden einer Basis für die Wiegeanordnung durch Spritzgießen;
Einbauen einer Leiterplatte (56) in die Wiegeanordnung (14);
Zusammenbauen der Basis, einer vorderen Abdeckung, einem Auslösemechanismus und der Leiterplatte (56); und,
manuelles Anbringen eines Klebepads (58) an die zweite Seite der Wiegeanordnung (14).

## Revendications

1. Support (14) servant à monter une unité (12) sur une des surfaces internes d'un véhicule comportant:
une plaque de montage qui sert à recevoir l'unité (12) sur un premier côté et qui est fixée sur la surface interne au moyen d'un adhésif sur un deuxième côté,
**caractérisé en ce que** la plaque de montage comprend un point faible (59) prévu pour se fracturer si une force de séparation prédéterminée, exercée sur la plaque de montage, est plus élevée qu'une force limite lorsque la plaque de montage est collée sur la surface interne, la force étant inférieure à la force d'adhésion entre la plaque de montage et la surface interne, de telle sorte que lorsque la force est exercée, une partie de la plaque de montage reste collée sur la surface interne et la plaque de montage est brisée.

2. Support (14) selon la revendication 1, **caractérisé en ce que** le point faible se fracture si la force de séparation exercée sur la plaque de montage est plus élevée qu'une force limite prédéterminée et dans un sens s'éloignant de la surface interne lorsque la plaque de montage est collée sur la surface interne.

3. Support (14) selon la revendication 1, **caractérisé en ce que** le point faible (59) se fracture si la force de séparation exercée sur la plaque de montage est plus élevée qu'une force limite prédéterminée et dans un sens parallèle à la surface interne lorsque la plaque de montage est collée sur la surface interne.

4. Support (14) selon l'une quelconque des revendications précédentes, **caractérisé en ce que** le point faible (59) comprend une partie découpée ou bien **en ce que** le point faible (59) comprend une échancrure.

5. Support (14) selon l'une quelconque des revendications précédentes, dans lequel le point faible comprend au moins deux parties découpées en forme d'arc, **caractérisé en ce que** les parties découpées en forme d'arc définissent une région du support de taille essentiellement similaire à celle d'un tampon adhésif (56) fixé sur le deuxième côté du support en vue de l'adhésion sur la surface interne.

6. Support (14) selon l'une quelconque des revendications précédentes, dans lequel le support comporte, sur le deuxième côté, une plusieurs projections (82) configurées de manière à renforcer le support (14).

7. Système télématique comportant:
un support (14) selon l'une quelconque des revendications précédentes; et
une unité télématique (12).

8. Système télématique selon la revendication 7, dans lequel l'unité télématique (12) comporte:
un module de télécommunications;
un haut-parleur (32); et
un microphone (33).

9. Système télématique selon la revendication 7 ou 8, dans lequel l'unité télématique (12) comprend un système mondial de positionnement (GPS).

10. Système télématique selon l'une quelconque des revendications 7 à 9, dans lequel l'unité télématique (12) comprend un module d'identification comportant un premier identificateur unique et dans lequel le support (14) comprend un module d'identification (47) comportant un deuxième identificateur unique, l'unité télématique (12) transmettant le premier et le deuxième identificateurs uniques à un serveur de données distant lorsque l'unité télématique (12) est fixée sur le support (14).

11. Système télématique selon l'une quelconque des revendications 7 à 10, dans lequel l'unité télématique (12) comprend un accéléromètre (44) à trois axes.

12. Système télématique selon l'une quelconque des revendications 7 à 11, dans lequel l'unité télématique (12) comprend un module d'étalonnage servant à détecter si le système télématique n'est pas fixé sur la surface interne du véhicule et à présenter un rapport à un serveur de données distant.

13. Système télématique selon l'une quelconque des revendications 7 à 12, dans lequel l'unité télématique (12) comprend un module d'enregistrement du kilométrage (45) prévu pour enregistrer le kilométrage du véhicule lorsque le système télématique est fixé sur la surface interne du véhicule et pour transmettre le kilométrage à un serveur de données distant.

14. Système télématique selon l'une quelconque des revendications 7 à 13, comportant par ailleurs un tampon adhésif (58) doté d'une pellicule détachable sur un premier côté à découvert du tampon lorsque celui-ci (58) est fixé sur le deuxième côté du support.

15. Procédé de fabrication d'un support (14) selon l'une quelconque des revendications 1 à 6, qui consiste
à former une base pour le support, ceci par moulage par injection;
à installer un circuit imprimé (56) dans le support (14);
à assembler la base, un couvercle avant, un mécanisme de détachement ainsi que le circuit imprimé (56); et
à fixer manuellement un tampon adhésif (58) sur le deuxième côté du support (14).
